Europäisches Patentamt

European Patent Office

Office européen des brevets

(11) Publication number: **0 147 910**
**B1**

(12) **EUROPEAN PATENT SPECIFICATION**

(45) Date of publication of patent specification: **02.05.90**

(51) Int. Cl.⁵: **B 62 D 65/00, B 23 P 21/00**

(21) Application number: **84304761.4**

(22) Date of filing: **12.07.84**

(54) **Positioning and holding apparatus.**

(30) Priority: **04.01.84 GB 8400094**
**15.03.84 GB 8406770**

(43) Date of publication of application:
**10.07.85 Bulletin 85/28**

(45) Publication of the grant of the patent:
**02.05.90 Bulletin 90/18**

(84) Designated Contracting States:
**AT BE CH DE FR GB IT LI LU NL SE**

(56) References cited:
**EP-A-0 084 012**
**DE-A-3 144 686**
**DE-U-1 953 869**
**FR-A-2 383 818**
**FR-A-2 483 284**
**US-A-3 272 347**

(73) Proprietor: **LITTON U.K. LIMITED**
**26, Temple Street**
**Aylesbury Buckinghamshire (GB)**

(72) Inventor: **Pigott, Norman Brian**
**95 Parsonage Lane**
**Bishop's Stortford Hertfordshire (GB)**

(74) Representative: **Nash, Keith Wilfrid et al**
**KEITH W. NASH & Co. Pearl Assurance House**
**90-92 Regent Street**
**Cambridge CB2 1DP (GB)**

Courier Press, Leamington Spa, England.

## Description

Field of invention

This invention relates to apparatus for positioning and holding components during assembly of the components on a production line. The apparatus is particularly, but not exclusively, suitable for positioning and holding the parts of a vehicle body shell for welding.

Background to the invention

When welding together components to produce a vehicle body shell, difficulties arise in holding the component pieces, i.e. underbody, roof and two sides, in correct relative positions for welding.

One attempt to overcome this problem when welding vehicle sides to the underbody is to provide three co-operating intermittent endless conveyors: a central conveyor carrying a series of so-called trucks, each substantially identical and adapted to receive a vehicle underbody; and two side conveyors, one on each side of the central conveyor, each carrying a series of so-called gates, the gates on each side conveyor being substantially identical and each adapted to receive an appropriate vehicle side. In use, an underbody and two sides are fed on the conveyors to a working station and the conveyors are stopped. The parts are then assembled, generally by manual welding, and the welded body is then conveyed away.

In practice, certain problems arise with this arrangement as follows:

1) the arrangement is slow and not suitable for automation;

2) the trucks and beds are liable to be bent or otherwise damaged in use, resulting in production of distorted and non-uniform products;

3) a particular arrangement is suitable for production of only one body model and is not variable.

In an attempt to overcome these problems alternative systems have been devised.

Firstly, the so-called Robogate system involves use of only one or two shuttle beds in place of a series of trucks, and a unique pair of gates for each body model. In a typical embodiment of this system there is provided a shuttle bed with two pairs of gates, each pair for producing a different body model. In use, the underbody, sides and roof are initially secured together in approximately correct positions by so-called toy-tabbing, i.e. by providing metal tabs which pass through appropriate holes, with the ends of the tabs then being twisted. The toy-tabbed assembly is lifted onto the shuttle bed and an appropriate pair of gates moved inwardly to hold the pieces in appropriate relative positions. Welding can then be carried out, e.g. using robots. After welding is completed the gates are moved out and the welded shell is removed. If an alternative body is to be produced, e.g. a hatchback model rather than a notchback, in practice it is commonly possible to use the same shuttle bed because a common underbody is used, but different gates are required. The second pair of gates is accordingly moved into position in place of the first pair, and operation is resumed.

Such an embodiment thus enables two body models to be produced, with a typical time of fifteen seconds required for changing the gates for different body models.

Because the arrangement can use a unique shuttle bed and unique pair of gates for a particular model, problems of producing non-identical bodies do not arise.

Further, a similar arrangement is provided by the so-called Fatagate system. A typical embodiment comprises a single shuttle bed, with three pairs of gates located on a vertically movable conveyor. Such an arrangement permits three model variations, with a typical changeover time of about 26 seconds.

This arrangement can occupy less space than is required by the Robogate system, but greater vertical space is required. Further, because the gates typically weigh about 2 tons each, bulky complex machinery is required to move them vertically for changeover.

Summary of the invention

According to the invention there is provided apparatus for use in a production line for positioning the individual parts of assemblies of parts and for clamping the parts in their correct relative positions by means of tool sets, the apparatus comprising means for transporting the assemblies along a horizontal path through the apparatus, and a plurality of pillars at one or both sides of, and mounted for individual movement towards and away from, said path, the pillars supporting at least one set of tools for positioning and clamping the parts of the assemblies, characterised in that at least some of the pillars support more than one tool set and are individually rotatable about a verttical axis between a position where one tool set is presented to the path of movement ready for cooperation with an assembly and another position where a different tool set is presented ready for cooperation with a different assembly.

This apparatus makes it possible to pass different assemblies along a production line, for example hatchback and notchback variants of a car body. One set of tools will be presented to the path of movement for one variant and another set will be presented for the other variant, with the pillars rotating between positions as one body moves out of the apparatus, and the other moves in.

The invention finds particular application in connection with spot-welding and/or glueing together metal and other components where it is important that the various components are held accurately in place during welding or glueing. The invention is thus particularly useful in the production of vehicle bodies, and also other sheet metal articles such as washing machines and filing cabinets. A particularly important application of the invention is in vehicle body-framing, i.e. the assembly of sides, underbody and roof to produce a vehicle body shell. Apparatus in accordance with the invention may also be used for side aperture construction and engine compartment construction.

When used for vehicle body-framing, there may be two, three or four pillars for each side of the vehicle, on each side of the path.

In a further aspect the present invention thus provides a vehicle framing station comprising a track extending along a horizontal path, means for transporting a vehicle underbody along the track through the station, and one or more pillars at each side of the track, each of which pillars is both mounted for individual movement towards and away from the track and is individually rotatable about a vertical axis to bring a selected one of two or more sets of tools carried thereby into an operative position in which parts to be welded together and to the underbody are clamped by the tool sets in the correct relative positions for welding. .

The body panels to be welded together may be loosely assembled on the underbody before the underbody enters the station. This loose assembly can be held together by toy-tabbing.

Alternatively, the underbody may enter the station without the side panels and roof panel. The pillars can be swung out to a horizontal or near horizontal position, the side panels loaded onto the faces of the pillars in contact with the appropriate tools on the pillars, and the pillars can then swing back to their upright position to position the side panels relative to the underbody. If this procedure is used, the roof panel will be lowered into place in a downstream working station.

With this alternative procedure, it is possible to dispense with the toy-tabbing stage.

When the body sides, roof and underbody are pre-assembled in approximately correct positions, e.g. by toy-tabbing, the assembled shell is moved into the station, and the pillars are then moved in to locate and hold the side panels in appropriate position relative to the other panels for welding. Welding is then carried out, e.g. using robots. After welding has been completed the pillars are then moved back and the welded body shell is removed. The process is then repeated as appropriate.

As each pillar is independently rotatable and carries two or more sets of tools, many combinations of tools in the operative position are possible, giving great versatility.

The tools conveniently comprise fixtures and clamps. The fixtures provide precise reference points in space, and the clamps ensure that the parts to be secured together are held together with adequate pressure during the welding process. The pillars may also carry locating means for bringing the parts into correct positions in space, if necessary.

The pillars are preferably rotatable about a vertical axis, but horizontal or inclined axes of rotation are also possible.

As pillars are also movable towards and away from the path, they can be moved away from the path to allow an assembly to enter or leave the apparatus, and can be moved toward the path to take up their operative positions. This movement of the pillars may take place by hinging the pillars at their bases, so that the pillars can be swung back away from the path. In another embodiment, however, the pillars can slide in and out while remaining in a substantially vertical orientation.

The position of the pillars in the apparatus can be adjustable to allow the apparatus to be set up for use with a particular assembly or range of assemblies. The bases of the pillars may be mounted on tracks which extend parallel and/or at right angles to the path.

Where pivotable pillars are used, the pillars may be held in the vertical position by a locating pin such as a shot pin or wedge action pin to give precise working orientation.

When used in vehicle body-framing, the number of sets of tools carried by each pillar is selected according to body variants required. Four sets of tools is suitable, providing good scope for variants without undue complexity.

It is to be noted that such an arrangement enables, say, variants of body rear configuration (e.g. hatchback, notchback or estate) to be clamped by altering only the relevant pillar or pillars on each side.

Each pillar is preferably securable in position after rotation by a locating pin, e.g. a shotpin or a wedge-action pin, to ensure precise indexing. When the pillar is located in position, a pneumatic supply is conveniently operatively connected with the appropriate set of tools for that index position. The locating pin and pneumatic supply are conveniently carried by a beam which may extend between the tops of aligned pillars, e.g. forming the side arrangement of the vehicle body-framing apparatus. This beam may also provide a lead-in slot which receives the top end of the pillar when the pillar moves to its operating position.

Each pillar preferably includes its own computer control means having a program for each tool set, the correct program being selected by the indexing means.

Each pillar is preferably provided with a grid pattern of holes so that tools are replaceable. Tool replacement may be necessary when the apparatus is to be used for different assemblies, or for maintenance purposes.

The base of each pillar is conveniently removably attached to a station base for substitution or changeover.

The pillar bases may be movably, e.g. slidably attached to a station base for repositioning for different models.

If any tool is bulky, then it is conveniently hingeably mounted to the pillar so that it may be moved, e.g. by pneumatic means, to a position where it will not hinder securing operations when not in use.

It will be apparent that the present invention, in preferred embodiments at least, can provide a vehicle body-framing station which has several advantages as compared with the prior art systems discussed above.

1. Rapid tool selection is possible because only a simple rotation of one or more pillars is required. This feature reduces the time required between working on one variant of an assembly and another variant. A change time of under five seconds is possible, i.e. within the time generally taken to transfer an assembly in and out of the station. This means that model variants can be handled on a single production line without having any effect on production rate.

2. The equipment required to produce a range of model variants is far more compact, and can use of to one-third to one-fifth of the manufacturing space required for prior art equipment.

3. The weight of components to be moved during changeover is low, so that the operating mechanism can be simple, light, compact and cheap.

The invention will be further described, by way of example, with reference to the accompanying drawings, in which:

In the drawings

Figure 1 is a schematic perspective view of one embodiment of a vehicle body-framing station;

Figure 2 is a view similar to Figure 1 of an alternative embodiment.

Figure 3 is a detail view of one pillar: and

Figure 4 is a schematic plan view of a production line.

Detailed description of the drawings

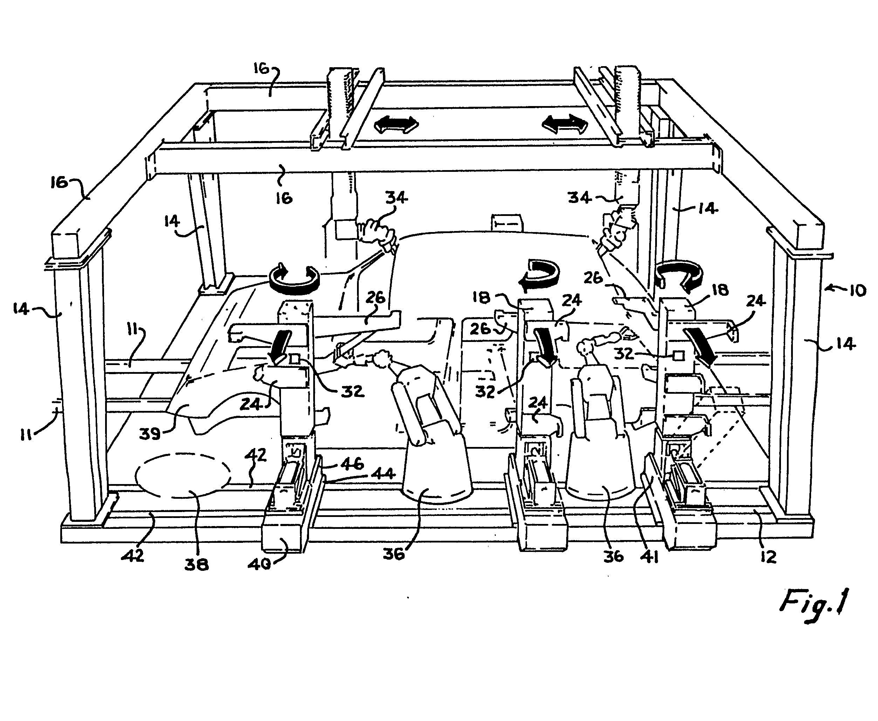

Figure 1 illustrates an automated vehicle body-framing station comprising a framework 10 having a base 12, upright corner pillars 14 and upper cross-beam 16. The upper beams 16 may be omitted. A bed (not shown) is located on the base for receiving a vehicle body shell made up from an underbody, a roof and two sides, loosely secured together in approximately correct positions for welding, e.g. by toy-tabbing.

Before this body shell can be welded, the underbody, roof and sides must be securely clamped in their correct relative positions. Three pillars 18 are provided on each side of a transfer path through the station, for locating and holding the parts of the vehicle body in their correct relative positions, so that they can be welded. The transfer path is defined by two parallel rails 11.

The pillars 18 are mounted on bases 40. Each base has a lower part 44 which can slide sideways on rails 42 and an upper part 46 which can slide in and out on the lower part 44. The pillars can be easily moved to any position, as required when setting up the station to handle a particular assembly.

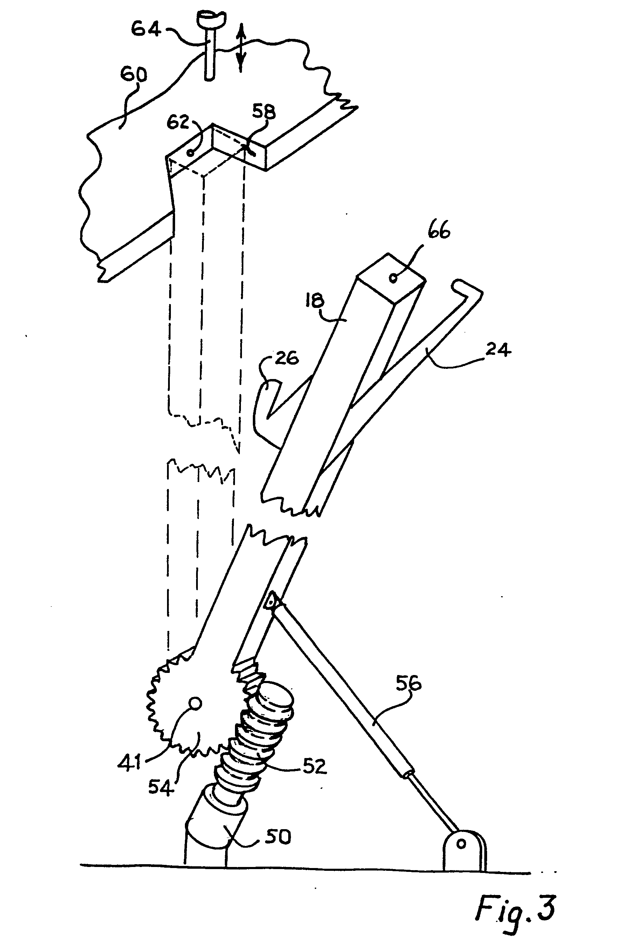

Once the pillars have been set to a particular position, by moving their bases which are then locked in place, the pillars are able to move in two senses. Firstly the pillars can move towards and away from the path 11 to allow a vehicle body 39 to move in or out of the station. This movement is accomplished in Figure 1 by pivoting the pillars about an axis 41. This pivoting action is effected by an electric motor 50 (see Figure 3) which drives a worm gear 52 meshing with a spur gear 54 fixed to the bottom of the pillar. This drive mechanism is used because it is quick acting and because a pneumatic ram will not lift the pillar. A pneumatic piston/cylinder unit 56 acts between the pillar 18 and the floor of the station to act as an air spring and cushion the movement and assist lifting of the pillar.

When the pillar moves to its erect position, the top is received in a guide 58 formed in a bar 60 attached to the framework 10 of the station. This bar is not shown in Figure 1. When the pillar reaches its end position, it contacts a switch 62 at the bottom of the guide, and when these switches show that all the pillars are vertical, a subsequent stage of operation can take place.

The mouth of the guide 58 is wider than the bottom, to guide the pillar home.

When the pillar is in its erect position as indicated by the switch 62, an air feed nozzle 64 descends into a hole 66 in the top of the pillar. By means of suitable non-return valving, the interior of the pillar which forms an air pressure chamber can be pressurised to operate the selected tools 24 or 26.

In the illustrated embodiment, each pillar 18 is of square cross-section and can carry up to four sets of tools each for producing a different body model, models A, B, C and D. In the illustrated embodiment only two sets of tools 24 and 26 are shown, for producing models A and B. Each pillar 18 is arranged for independent indexed rotation by hydraulic or mechanical means (not shown) about its vertical axis for selectively bringing each set of tools into an operative position, adjacent the body to be welded.

Each pillar carries its own computer control means 32 having a program for each tool set, the correct program being selected by the indexing means. Each pillar is securable in the selected rotational position by a locating pin (not shown) to ensure precise indexing.

The framework 10 carries two overhead robots 34, adjustably movable on upper beams of the framework. Freestanding robots 36 are also provided on the framework base, two robots 36 being illustrated in the Figure, with areas such as areas 38 being provided for extra freestanding robots if required.

The sets of tools 24, 26 include fixtures to provide precise reference points in space and clamps to ensure that the parts to be secured are held together with adequate pressure. Locating means may also be provided for bringing the parts into correct position and space if necessary.

With the component parts appropriately located, welding is then carried out under computer control by the robots. When welding has been completed, the sub-frameworks are moved outwardly, the welded body shell is moved from the framework along the tracks 11 and a new body to be welded is moved in its place. The process is repeated as appropriate.

If the next body is of a different style, then the relevant pillar or pillars 18 are rotated by the action of the local computer control means to bring a different set of tools into the operative position as appropriate. Such rotation takes about five seconds, and is within the time generally taken to transfer a vehicle body in and out, so that model changes need have no effect on production rate.

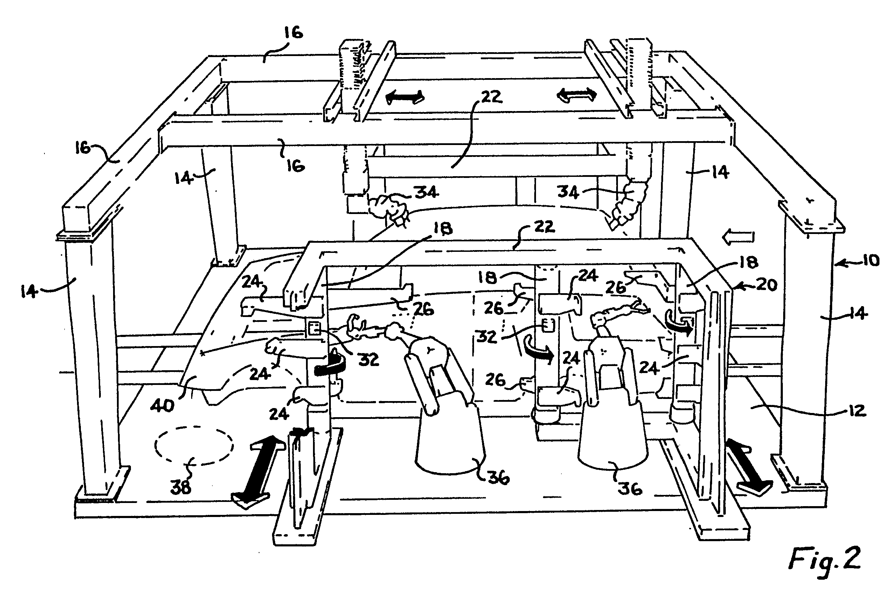

The embodiment illustrated in Figure 2 is generally similar to that of Figure 1. The main area of difference is that the pillars 18 are mounted in sub-frameworks 20, and the whole sub-framework 20 on each side moves in and out as indicated by arrows A. The beam 22 forming the top of each sub-framework corresponds to the beam 60 of Figure 3.

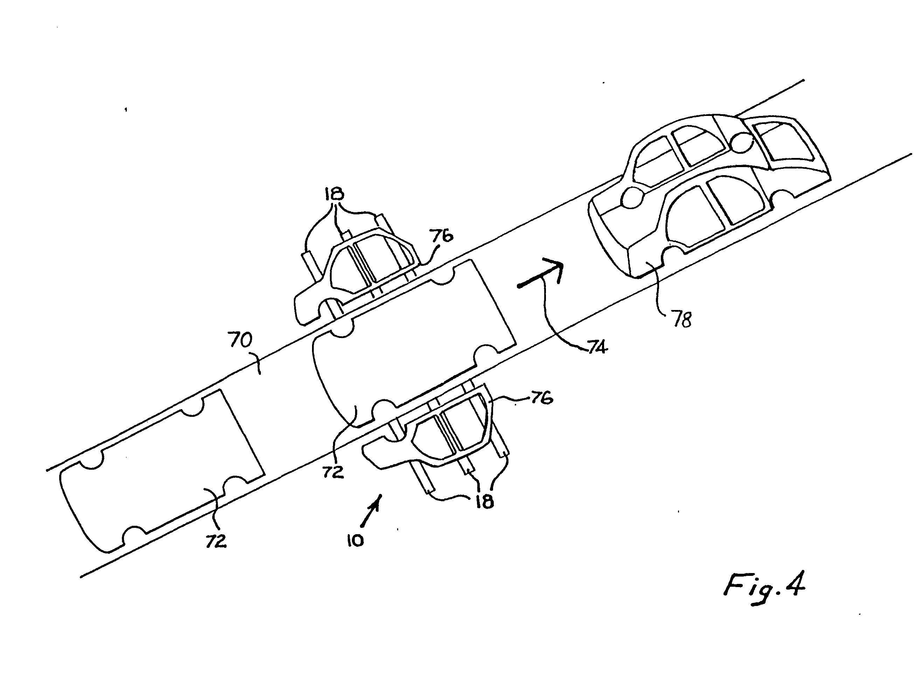

Figure 4 shows an alternative way of working. In this Figure, an underbody 72 is loaded on a production line 70 moving in the direction of an arrow 74. The underbody 72 may have the engine compartment already built up at the front end.

When the underbody enters the framing station 10, the pillars 18 are pivoted fully outwards into substantially horizontal positions. Side panel assemblies 76 are delivered to the station and are laid on the pillars, where they will fit in with, and be gripped by, tools 24 or 26 on the upper faces of the pillars. The pillars are then swung up, and when they are erect the side panels will be correctly positioned relative to the underbody where they can be first clamped and then welded, to produce a body shell. The pillars 18 are lowered again and the shell 78 moved out of the station by the production line. At a subsequent working station, the roof panel can be dropped down and welded to the body.

## Claims

1. Apparatus for use in a production line for positioning the individual parts of assemblies of parts and for clamping the parts in their correct relative positions by means of tool sets, the apparatus comprising means (11) for transporting the assemblies along a horizontal path through the apparatus, and a plurality of pillars (18) at one or both sides of, and mounted for individual movement towards and away from, said path, the pillars supporting at least one set of tools (24, 26) for positioning and clamping the parts of the assemblies, characterised in that at least some of the pillars (18) support more than one tool set (24, 26) and are individually rotatable about a vertical axis between a position where one tool set is presented to the path of movement ready for cooperation with an assembly and another position where a different tool set is presented ready for cooperating with a different assembly.

2. Apparatus as claimed in claim 1, wherein the pillars (18) are hinded at their bases, and can be moved about this hinge axis to move towards and away from the path.

3. Apparatus as claimed in claim 1, wherein the pillars (18) on each side of the path are mounted on a common sub-framework, and the sub-framework is slideable towards and away from the path.

4. Apparatus as claimed in any preceeding claim, wherin each pillar (18) has a base (40), and wherein the base is moveable transversely and/or parallel to the direction of the path.

5. A vehicle framing station comprising a track (11) extending along a horizontal path, means for transporting a vehicle underbody (39) along the track through the station, and one or more pillars (18) at each side of the track, each of which pillars is both mounted for individual movement towards and away from the track and is individually rotatable about a vertical axis to bring a selected one of two or more sets of tools (24, 26) carried thereby into an operative position in which parts to be welded together and to the underbody are clamped by the tool sets in the correct relative positions for welding.

6. A vehicle framing station as claimed in claim 5, having three pillars (18) on each side of the path.

7. A vehicle framing station as claimed in claim 5 or claim 6, wherein one set of tools (24) carried by the pillars is adapted to position and hold parts of one vehicle body type, and another set of tools (26) carried by the pillars is adapted to position and hold the parts of a different vehicle type.

8. A vehicle framing station as claimed in any one of claims 5 to 7, including a plurality of robot welders (34).

9. A vehicle framing station as claimed in any one of claims 5 to 8, wherein the tools carried by the pillars are pneumatically operated, and the interior of each pillar (18) comprises an air pressure chamber.

10. A vehicle framing station as claimed in claim 9, wherein the air pressure chamber in each pillar is pressurised from a compressed air source at the station each time a vehicle underbody is positioned in the station.

11. A vehicle framing station as claimed in any one of claims 5 to 10, wherein the pillars are pivotably mounted for movement between a substantially horizontal position in which they can receive a body side panel and a vertical or substantially vertical position in which they hold the vehicle parts together.

12. A vehicle framing station as claimed in claim 11, wherein the pillars (18) are locked in their vertical positions.

13. A vehicle framing station as claimed in any one of claims 5 to 12, wherein each pillar (18) carries four sets of tools.

14. A vehicle framing station as claimed in any one of claims 5 to 13, wherein each pillar (18) has its own computer control means having a program for each tool set.

15. A vehicle framing station as claimed in any one of claims 5 to 14, wherein each pillar (18) is provided with a grid pattern of holes for receiving tool fastenings, so that the tools are replaceable.

## Patentansprüche

1. Vorrichtung zum Verwenden in einer Fertigungsstraße zum Verbringen der einzelnen Teile von Teileanordnungen in ihre Lage und zum Festklemmen der Teile in ihrer richtigen Relativlage mit Hilfe von Werkzeugsätzen mit Mitteln (11) zum Transport der Anordnungen entlang einer horizontalen Bahn durch die Vorrichtung und mit einer Vielzahl von Ständern (18) an einer oder beiden Seiten diese Bahn und mit der Möglichkeit der Einzelbewegung in Richtung auf und von dieser Bahn weg, wobei die Ständer mindestens einen Werkzeugsatz (24, 26) zum Verbringen und Festklemmen der Teile der Anordnungen in ihrer Lage halten, dadurch gekennzeichnet, daß mindestens einige der Ständer (18) mehr als einen Werkzeugsatz (24, 26) halten und einzeln um eine Vertikalachse zwischen einer Stellung, in der ein Werkzeugsatz der Bewegungsbahn zum Zusammenwirken mit einer Anordnung dargeboten wird, und einer anderen Stellung, in der ein anderer Werkzeugsatz zum Zusammenwirken mit einer anderen Anordnung dargeboten wird, drehbar sind.

2. Vorrichtung wie in Anspruch 1 beansprucht, wobei die Ständer (18) an ihren Basen angelenkt sind und um diese Gelenkachse zur Bewegung in Richtung auf die Bahn und von dieser weg bewegt werden können.

3. Vorrichtung wie in Anspruch 1 beansprucht, wobei die Ständer (18) auf jeder Seite der Bahn auf einem gemeinsamen Unterrahmen befestigt sind und der Unterrahmen in Richtung auf die Bahn und von dieser weg verschiebbar ist.

4. Vorrichtung wie in irgendeinem der vorhergehenden Ansprüche beansprucht, wobei jeder Ständer (18) eine Basis (40) aufweist und wobei die Basis quer und/oder parallel zu der Richtung der Bahn bewegbar ist.

5. Eine Fahrzeug-Karosseriebaustation mit einer entlang einer horizontalen Bahn verlaufenden Schiene (11), mit Mitteln zum Transport eines Fahrzeugbodens (39) entlang der Schiene durch die Station, mit einem oder mehreren Ständern (18) auf jeder Seite der Schiene, wobei jeder der Ständer sowohl einzeln in Richtung auf die Schiene und von dieser weg bewegbar als auch einzeln um eine vertikale Achse verdrehbar ist, um einen Werkzeugsatz, der aus einem oder mehreren der von dem Ständer getragenen Werkzeugsätzen (24, 26) ausgewählt wird, in eine Betriebsstellung zu verbringen, in der miteinander zu verschweißende und an den Unterboden anzuschweißende Teile durch die Werkzeugsätze in den zum Schweißen erforderlichen richtigen Relativlagen geklemmt werden.

6. Eine Fahrzeug-Karosseriebaustation wie in Anspruch 5 beansprucht mit drei Ständern (18) auf jeder Seite der Bahn.

7. Eine Fahrzeug-Karosseriebaustation wie in Anspruch 5 oder Anspruch 6 beansprucht, wobei ein von den Ständern getragener Werkzeugsatz (24) Teile einer Fahrzeugkarosseriebauart in ihre Stellung verbringen und halten kann und ein anderer von den Ständern getragener Werkzeugsatz (26) Teile einer anderen Fahrzeugbauart in ihre Stellung verbringen und halten kann.

8. Eine Fahrzeug-Karosseriebaustation wie in irgendeinem der Ansprüche 5 bis 7 beansprucht mit einer Vielzahl von Schweißrobotern (34).

9. Eine Fahrzeug-Karosseriebaustation wie in irgendeinem der Ansprüche 5 bis 8 beansprucht, wobei die von den Ständern getragenen Werkzeuge pneumatisch betätigt werden und das Innere jedes Ständers (18) eine Luftdruckkammer ist.

10. Eine Fahrzeug-Karosseriebaustation wie in Anspruch 9 beansprucht, wobei die Luftdruckkammer in jeder Säule aus einer Luftdruckquelle an der Station jedesmal dann beaufschlagt wird, wenn ein Fahrzeugboden in der Station angeordnet ist.

11. Eine Fahrzeug-Karosseriebaustation wie in irgendeinem der Ansprüche 5 bis 10 beansprucht, wobei die Ständer zwecks Bewegung zwischen einer im wesentlichen horizontalen Stellung, in der sie eine Karosserieseitenwand aufnehmen können, und eine senkrechten oder im wesentlichen senkrechten Stellung, in der sie die Fahrzeugteile zusammenhalten, schwenkbar aufgestellt sind.

12. Eine Fahrzeug-Karosseriebaustation wie in Anspruch 11 beansprucht, wobei die Ständer (18) in ihrer senkrechten Stellung verriegelt sind.

13. Eine Fahrzeug-Karosseriebaustation wie in irgendeinem der Ansprüche 5 bis 12 beansprucht, wobei jeder Ständer (18) vier Werkzeugsätze trägt.

14. Eine Fahrzeug-Karosseriebaustation wie in irgendeinem der Ansprüche 5 bis 13 beansprucht, wobei jeder Ständer (18) seine eigene Computersteuereinrichtung mit einem Programm für jeden Werkzeugsatz aufweist.

15. Eine Fahrzeug-Karosseriebaustation wie in irgendeinem der Ansprüche 5 bis 14 beansprucht, wobei jeder Ständer (18) ein Lochgittermuster zur Aufnahme von Werkzeughalterungen aufweist, so daß die Werkzeuge austauschbar sind.

## Revendications

1. Dispositif destiné à être utilisé dans une chaîne de fabrication pour positionner les pièces individuelles d'ensembles de pièces et pour serrer les pièces dans leurs positions relatives correctes au moyen de jeux d'outils, le dispositif comprenant des moyens (11) servant à déplacer les ensembles le long d'une trajectoire horizontale à travers le dispositif, et une pluralité de piliers (18) situés d'un côté ou des deux côtés de ladite trajectoire et montés de manière à avoir un déplacement individuel de rapprochement et d'écartement par rapport à ladite trajectoire, pour le positionnement et le serrage des pièces des ensembles, caractérisé en ce qu'au moins certains des piliers (18) supportent plus d'un jeu d'outils (24, 26) et peuvent tourner individuellement autour d'un axe vertical, entre une position dans laquelle un jeu d'outils est présenté à la trajectoire de déplacement à l'état prêt pour coopérer avec un ensemble de pièces et une autre position dans laquelle un jeu différent d'outils est présenté à l'état prêt pour coopérer avec un ensemble de pièces différent.

2. Dispositif selon la revendication 1, dans lequel les piliers (18) sont articulés au niveau de leurs bases, et peuvent être rapprochés et écartés de la trajectoire par pivotement autour de leur axe d'articulation.

3. Dispositif selon la revendication 1, dans lequel les piliers (18) situés de chaque côté de la trajectoire sont montés sur un châssis de support secondaire commun, et le châssis de support secondaire peut être écarté et rapproché de la trajectoire par glissement.

4. Dispositif selon l'une quelconque des revendications précédentes, dans lequel chaque pilier (18) comporte une base (40), et dans lequel la base est déplaçable transversalement et/ou parallèlement à la direction de la trajectoire.

5. Poste d'assemblage de véhicules comportant une piste (11) s'étendant suivant une trajectoire horizontale, des moyens pour transporter un dessous de carrosserie de véhicule (39) le long de la piste à travers le poste, et un ou plusieurs piliers (18) placés de chaque côté de la piste, chacun des piliers étant montés de manière à pouvoir être à la fois individuellement rapproché et écarté de la trajectoire et tourner individuellement autour d'un axe vertical de manière à amener un ou plusieurs ensembles sélectionnés d'outils (24, 26), portés par ce ou ces piliers, dans une position active, dans laquelle les pièces devant être soudées entre elles et au-dessous de carrosserie sont serrées par les ensembles d'outils dans les positions correctes relative pour le soudage.

6. Poste d'assemblage de véhicules selon la revendication 5, comportant trois piliers (18) de chaque côté de la trajectoire.

7. Poste d'assemblage de véhicules selon la revendication 5 ou 6, dans lequel un ensemble d'outils (24) porté par les piliers est adapté pour positionner et maintenir des pièces d'un type de carrosserie de véhicule, et un autre ensemble d'outils (26) porté par les piliers est adapté pour positionner et maintenir les pièces d'un type différent de véhicule.

8. Poste d'assemblage de véhicules selon l'une quelconque des revendations 5 à 7, comportant une pluralité de robots soudeurs (34).

9. Poste d'assemblage de véhicules selon l'une quelconque des revendications 5 à 8, dans lequel les outils portés par les piliers sont actionnés pneumatiquement, et une chambre à air comprimé est prévue à l'intérieur de chaque pilier (18).

10. Poste d'assemblage de véhicules selon la revendication 9, dans lequel la chambre à air sous pression présente dans chaque pilier est placée sous pression à partir d'une source d'air comprimé située dans le poste, chaque fois qu'un dessous de carrosserie de véhicule est positionné dans le poste.

11. Poste d'assemblage de véhicules selon l'une quelconque des revendications 5 à 10, dans lequel les piliers sont montés pivotants de manière à se déplacer entre une position sensiblement horizontale, dans laquelle ils peuvent recevoir un panneau latéral de carrosserie, et une position verticale ou sensiblement verticale, dans laquelle ils maintiennent réunies les parties du véhicule.

12. Poste d'assemblage de véhicules selon la revendication 11, dans lequel les piliers (18) sont verrouillés dans leurs positions verticales.

13. Poste d'assemblage de véhicules selon l'une quelconque des revendications 5 à 12, dans lequel chaque pilier (18) porte quatre jeux d'outils.

14. Poste d'assemblage de véhicules selon l'une quelconque des revendications 5 à 13, dans lequel chaque pilier (18) comporte ses propres moyens de commande à ordinateur, comportant un programme pour chaque jeu d'outils.

15. Poste d'assemblage de véhicules selon l'une quelconque des revendications 5 à 14, dans lequel chaque pilier (18) comporte un réseau de trous servant à recevoir des éléments de fixation d'outils, de sorte que les outils sont remplaçables.

Fig.1

Fig.2

Fig.3

Fig. 4